(19)

Europäisches
Patentamt

European
Patent Office

Office européen
des brevets

(11)  EP 4 306 348 A1

(12)  EUROPEAN PATENT APPLICATION

(43) Date of publication:
17.01.2024  Bulletin 2024/03

(21) Application number: 23171509.5

(22) Date of filing: 04.05.2023

(51) International Patent Classification (IPC):
B60K 31/00 (2006.01)       B60W 30/14 (2006.01)
B60K 28/16 (2006.01)       B60W 30/18 (2012.01)

(52) Cooperative Patent Classification (CPC):
B60W 30/143; B60K 28/16; B60K 31/00;
B60W 30/18036; B60W 30/18172; B60K 2310/246;
B60W 2510/087; B60W 2510/244; B60W 2510/246;
B60W 2520/10; B60W 2520/263; B60W 2520/28;
B60W 2540/12

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.07.2022  CN 202210834392

(71) Applicant: Gogoro Inc.
Wanchai, Hong Kong (CN)

(72) Inventors:
• LI, Kai-Chiang
333 Taoyuan City (TW)
• YANG, Ching-Tan
333 Taoyuan City (TW)
• LIU, Tzu-Yu
333 Taoyuan City (TW)
• CHEN, Guan-Ren
333 Taoyuan City (TW)

(74) Representative: Viering, Jentschura & Partner
mbB
Patent- und Rechtsanwälte
Am Brauhaus 8
01099 Dresden (DE)

(54)  **VEHICLE CONTROL METHOD AND VEHICLE**

(57)     A vehicle control method has: determining whether the vehicle meets at least one mode release condition when a vehicle is driving in a cruise control mode, in which the mode release condition has that a wheel speed difference between a front wheel and a rear wheel of the vehicle is equal to or greater than a predetermined difference; and releasing the cruise control mode when the vehicle meets the mode release condition.

Fig. 1

## Description

## BACKGROUND

Technical Field

The present disclosure relates to a vehicle control method, a vehicle and a non-transitory computer readable storage medium.

Description of Related Art

Driving safety requires a high degree of concentration and adaptability to achieve. People often drive dangerously due to distraction and fatigue, endangering the safety of themselves and others, and causing loss of life and property. Therefore, in recent years, the development of vehicles has gradually moved towards the direction of electronization and safety, and attempts to develop various electronic mechanisms to assist drivers in driving.

Cruise control is currently the most representative driving assistance mechanism commonly used in high-speed driving environments. The cruise control can reduce the driver's action of operating the accelerator when the vehicle is driving at high speed, and the vehicle cruises at the speed set by the driver. However, when the driver is driving the vehicle on the road with poor conditions without knowing it, the vehicle driving at a constant speed cruise may bring safety hazards to the driver.

Accordingly, how to provide a vehicle control method to solve the aforementioned problems becomes an important issue to be solved by those in the industry.

## SUMMARY

An aspect of the disclosure is to provide a vehicle control method and a vehicle that can efficiently solve the aforementioned problems.

According to an embodiment of the disclosure, a vehicle control method includes: determining whether a vehicle meets at least one mode release condition when the vehicle is driving in a cruise control mode, in which the at least one mode release condition includes that a wheel speed difference between a front wheel and a rear wheel of the vehicle is equal to or greater than a predetermined difference; and releasing the cruise control mode when the vehicle meets the at least one mode release condition.

In an embodiment of the disclosure, the at least one mode release condition further includes at least one of: stored power of an electrical energy storage device of the vehicle is equal to or less than a predetermined power; a temperature of the electrical energy storage device is equal to or greater than a predetermined temperature; a speed of the vehicle is equal to or less than a safe speed; the vehicle receives a mode release request signal; a brake of the vehicle is operated; and a temperature of a power system of the vehicle is greater than a predetermined motor temperature.

In an embodiment of the disclosure, the vehicle control method further includes: determining whether the vehicle meets at least one first mode activation condition when the vehicle is not driving in the cruise control mode, in which the at least one first mode activation condition includes that the vehicle receives a mode activation request signal; and making the vehicle drive in the cruise control mode when the vehicle meets the at least one first mode activation condition.

In an embodiment of the disclosure, the at least one first mode activation condition further includes that a speed of the vehicle is equal to or greater than a first predetermined speed.

In an embodiment of the disclosure, the at least one first mode activation condition further includes at least one of: stored power of an electrical energy storage device of the vehicle is greater than a predetermined power; a temperature of the electrical energy storage device is less than a predetermined temperature; a brake of the vehicle is in an idle state; a speed of the vehicle is within a predetermined speed range; and a temperature of a power system of the vehicle is equal to or less than a predetermined motor temperature.

In an embodiment of the disclosure, the vehicle control method further includes: determining whether the vehicle meets second mode activation conditions when the vehicle is not driving in the cruise control mode, in which the second mode activation conditions include that the vehicle receives the mode activation request signal and the speed of the vehicle is equal to or less than a second predetermined speed; and making the vehicle drive in a reverse mode when the vehicle meets the second mode activation conditions.

In an embodiment of the disclosure, the second predetermined speed is less than the first predetermined speed.

According to an embodiment of the disclosure, a vehicle includes a body, a front wheel, a rear wheel, two wheel speed sensors, and a processor. The front wheel is rotatably engaged with the body. The rear wheel is rotatably engaged with the body. The wheel speed sensors are respectively configured to sense wheel speeds of the front wheel and the rear wheel. The processor is disposed on the body and configured to: determine whether the vehicle meets at least one mode release condition when the vehicle is driving in a cruise control mode, in which the at least one mode release condition includes that a wheel speed difference between a front wheel and a rear wheel is equal to or greater than a predetermined difference; and release the cruise control mode when the vehicle meets the at least one mode release condition.

In an embodiment of the disclosure, the at least one mode release condition further includes at least one of: stored power of an electrical energy storage device of the vehicle is equal to or less than a predetermined power; a temperature of the electrical energy storage device is equal to or greater than a predetermined temperature; a speed of the vehicle is equal to or less than a safe speed; the vehicle receives a mode release request signal; a brake of the vehicle is operated; and a temperature of a power system of the vehicle is greater than a predetermined motor temperature.

In an embodiment of the disclosure, the processor is further configured to: determine whether the vehicle meets at least one first mode activation condition when the vehicle is not driving in the cruise control mode, in which the at least one first mode activation condition includes that the vehicle receives a mode activation request signal; and make the vehicle drive in the cruise control mode when the vehicle meets the at least one first mode activation condition.

In an embodiment of the disclosure, the at least one first mode activation condition further includes that a speed of the vehicle is equal to or greater than a first predetermined speed.

In an embodiment of the disclosure, the at least one first mode activation condition further includes at least one of: stored power of an electrical energy storage device of the vehicle is greater than a predetermined power; a temperature of the electrical energy storage device is less than a predetermined temperature; a brake of the vehicle is in an idle state; a speed of the vehicle is within a predetermined speed range; and a temperature of a power system of the vehicle is equal to or less than a predetermined motor temperature.

In an embodiment of the disclosure, the processor is further configured to: determine whether the vehicle meets second mode activation conditions when the vehicle is not driving in the cruise control mode, in which the second mode activation conditions include that the vehicle receives the mode activation request signal and the speed of the vehicle is equal to or less than a second predetermined speed; and make the vehicle drive in a reverse mode when the vehicle meets the second mode activation conditions.

In an embodiment of the disclosure, the second predetermined speed is less than the first predetermined speed.

Accordingly, in the vehicle control method and the vehicle of the present disclosure, when the vehicle is driving in the cruise control mode, the vehicle is determined to meet the mode release condition at least when the wheel speed difference between the front and rear wheels of the vehicle is equal to or greater than the predetermined difference. In this way, the vehicle in the cruise control mode can be automatically released from the cruise control mode when driving on a road with bad conditions or when the wheels are out of condition, thereby effectively avoiding the occurrence of traffic accidents.

It is to be understood that both the foregoing general description and the following detailed description are by examples, and are intended to provide further explanation of the disclosure as claimed.

## BRIEF DESCRIPTION OF THE DRAWINGS

The disclosure can be more fully understood by reading the following detailed description of the embodiment, with reference made to the accompanying drawings as follows:

Fig. 1 is a flow chart of a vehicle control method according to an embodiment of the present disclosure; and

Fig. 2 is a schematic diagram of a vehicle according to an embodiment of the present disclosure.

## DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts. However, specific structural and functional details disclosed herein are merely representative for purposes of describing example embodiments, and thus may be embodied in many alternate forms and should not be construed as limited to only example embodiments set forth herein. Therefore, it should be understood that there is no intent to limit example embodiments to the particular forms disclosed, but on the contrary, example embodiments are to cover all modifications, equivalents, and alternatives falling within the scope of the disclosure.

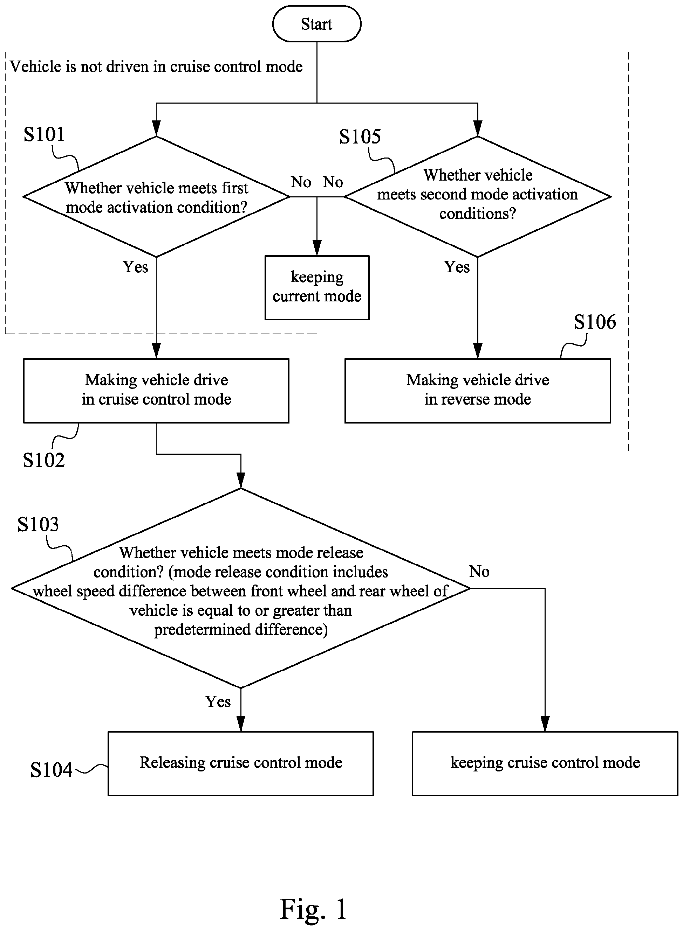

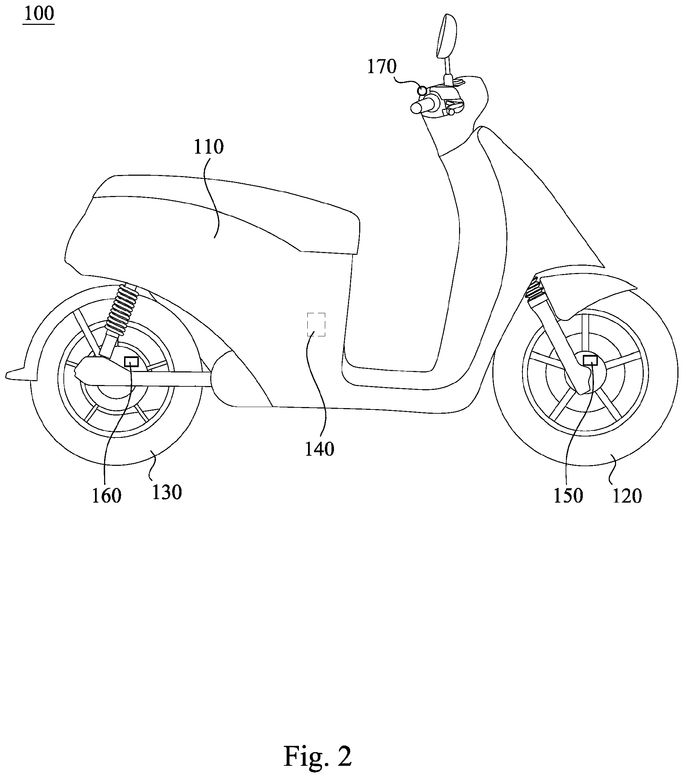

Reference is made to Figs. 1 and 2. Fig. 1 is a flow chart of a vehicle control method according to an embodiment of the present disclosure. Fig. 2 is a schematic diagram of a vehicle 100 according to an embodiment of the present disclosure. As shown in Figs. 1 and 2, in the present embodiment, the vehicle control method includes steps S101, S102, S103, S104 and can be executed on the vehicle 100.

Step S101: determining whether the vehicle 100 meets a first mode activation condition when the vehicle 100 is not driving in a cruise control mode, in which the first mode activation condition includes that the vehicle 100 receives a mode activation request signal. The mode activation request signal will be described in detail in the following paragraphs.

Step S102: making the vehicle 100 drive in the cruise control mode when the vehicle 100 meets the first mode activation condition, and making the vehicle 100 drive at a cruise target speed corresponding to the cruise control mode. On the contrary, if the vehicle 100 does not meet the first mode activation condition, the vehicle 100 keeps operating in the current mode. For example, if the vehicle 100 does not meet the first mode activation condition, the vehicle 100 does not enter the cruise control mode, and accelerates and decelerates according to operating conditions of an accelerator and a brake.

In some embodiments, the vehicle 100 is a two-wheeled vehicle (such as a scooter-type vehicle or other straddle-type vehicle) or a transportation vehicle with more than two wheels, but the present disclosure is not limited in this regard. The vehicle control method can also be applied to other types of transportation vehicles.

In some embodiments, the vehicle 100 includes a body 110, a front wheel 120, a rear wheel 130, a processor 140, and a function button 170. The front wheel 120 and the rear wheel 130 are rotatably engaged with the body 110. The processor 140 and the function button 170 are disposed on the body 110. For example, the function button 170 is a cruise control button or a combination button of cruise control and reverse, but the present disclosure is not limited in this regard. When the function button 170 is pressed when the vehicle 100 is not driving in the cruise control mode, the processor 140 can receive a corresponding pressing signal, and regard the pressing signal as the mode activation request signal. For example, the function button 170 may be implemented by a switch, and the switch is coupled to the processor 140, a power terminal, and a ground terminal. When the function button 170 is pressed, the switch connects the power terminal and the ground terminal, so that a current surge is conducted to the processor 140, and the current surge is the mode activation request signal. Then, the processor 140 enables the cruise control mode according to the mode activation request signal. Using a switch as a button to trigger a specific function is a common practice in the field of electronic circuits, and details are not described in the present disclosure.

The aforementioned steps S101 and S102 are both executed by the processor 140. In some embodiments, the processor 140 takes the speed of the vehicle 100 when the mode activation request signal is received as a set speed of the cruise control mode (i.e., the aforementioned cruise target speed), and makes the vehicle 100 drive at the set speed. For example, when the cruise target speed is set at 60 km/h and the current speed of the vehicle 100 is less than 60 km/h, the processor 140 will accelerate the vehicle 100 to reach the cruise target speed.

In some embodiments, the processor 140 is, for example, a microprocessor, a microcontroller, a programmable logic controller (PLC), a programmable gate array (PGA), an application specific integrated circuit (ASIC), or a controller capable of receiving signals from various sensors, performing logical operations, and sending signals to various components.

In some embodiments, the first mode activation condition further includes that the speed of the vehicle 100 is equal to or greater than a first predetermined speed. For example, the first predetermined speed is about 10 km/h, but the present disclosure is not limited in this regard.

In some embodiments, the first mode activation condition further includes that stored power (also known as residual power) of an electrical energy storage device (not shown) of the vehicle 100 is greater than a predetermined power. In some embodiments, the vehicle 100 is an electric vehicle that uses a motor to drive the rear wheel 130 and/or the front wheel 120, and electric power stored by the aforementioned electric energy storage device is the power source of the motor. For example, the predetermined power is about 12%, but the present disclosure is not limited in this regard. In this way, the vehicle control method of the present embodiment can prevent the vehicle 100 from entering the cruise control mode when the electric energy storage device is in a low power state.

In some embodiments, the aforementioned electrical energy storage device is, for example, any device that can store electricity and release the stored electricity, including but not limited to a battery pack or an ultracapacitor. The battery pack is, for example, one or more chemical storage cells, such as rechargeable or auxiliary battery cells (including, but not limited to, nickel-cadmium or lithium-ion battery cells).

In some embodiments, the first mode activation condition further includes that a temperature of the electrical energy storage device is less than a predetermined temperature. For example, the predetermined temperature is about 63 degrees Celsius, but the present disclosure is not limited in this regard. In this way, the vehicle control method of the present embodiment can prevent the temperature of the electrical energy storage device from further increasing due to operating in the cruise control mode when the electrical energy storage device is at a high temperature, thereby preventing the electric energy storage device and/or the vehicle 100 from being damaged.

In some embodiments, the first mode activation condition further includes that a brake of the vehicle 100 is not operated (i.e., the brake is in an idle state). In this way, the vehicle control method of the present embodiment can effectively avoid an accidental touch by a driver. The accidental touch is, for example, that the driver actually wants to operate the brake to decelerate the vehicle 100, but accidentally presses the aforementioned function button 170.

In some embodiments, the first mode activation condition further includes that the speed of the vehicle 100 is within a predetermined speed range. For example, the predetermined speed range is from about 10 km/h to about 60 km/h, but the present disclosure is not limited in this regard. In other words, when the speed of the vehicle 100 is less than 10 km/h or greater than 60 km/h, the vehicle 100 will not enter the cruise control mode. In this way, the vehicle control method of the present embodiment can prevent the vehicle 100 from driving at a speed other than the safe predetermined speed range which may cause safety hazards to the driver.

In some embodiments, the first mode activation condition further includes that no load shedding occurs to a power system (e.g., the motor) of the vehicle 100. That is, the motor keeps outputting power stably. Specifically, a temperature sensor (not shown) is disposed beside or inside the motor. The temperature sensor senses temperature of the motor at any time, and outputs the sensed data to the processor 140. When the temperature of the motor is greater than a predetermined motor temperature (e.g., 100 degrees Celsius), the processor 140 adjusts torque outputted to the motor to dynamically limit the driving torque, rotational speed, and output power of the motor, which is called load shedding. In other words, as long as the temperature of the motor remains at or below the predetermined motor temperature, no load shedding will occur to the motor.

As a side note, the temperature of the motor will start to drop after the load shedding occurs. The processor 140 will not release the load shedding until the temperature of the motor drops to be equal to or less than a safe motor temperature (the safe motor temperature is less than the predetermined motor temperature, e.g., 90 degrees Celsius). After the load shedding is released, the driving torque, rotational speed, and output power of the motor can be further increased to increase the current speed of the vehicle 100.

In some embodiments, the vehicle 100 must meet a plurality of first mode activation conditions to enter the cruise control mode. For example, when the processor 140 receives the mode activation request signal and the speed of the vehicle 100 is equal to or greater than the first predetermined speed, the vehicle 100 switches to the cruise control mode. Alternatively, the vehicle 100 switches to the cruise control mode only when the processor 140 receives the mode activation request signal, the current speed of the vehicle 100 is equal to or greater than the first predetermined speed, and the stored power of the electric energy storage device of the vehicle 100 is greater than the predetermined power. In some embodiments, the vehicle 100 must meet all the above-mentioned first mode activation conditions before entering the cruise control mode.

In addition, the cruise target speed of the cruise control mode (the cruise target speed is equal to or greater than the first predetermined speed) may be input to the processor 140 in advance. When the processor 140 receives the mode activation request signal, the processor 140 drives the motor to increase/decrease the speed of the vehicle 100 to the cruise target speed, and then switches the vehicle 100 to the cruise control mode. In some embodiments, the vehicle 100 switches to the cruise control mode only when the processor 140 receives the mode activation request signal and the vehicle 100 meets at least one of the aforementioned first mode activation conditions (e.g., the stored power of the electrical energy storage device is greater than the predetermined power).

Step S103: determining whether the vehicle 100 meets a mode release condition when the vehicle 100 is driving in the cruise control mode, in which the mode release condition includes that a wheel speed difference between the front wheel 120 and the rear wheel 130 of the vehicle 100 is equal to or greater than a predetermined difference.

Step S104: releasing the cruise control mode when the vehicle 100 meets the mode release condition. Otherwise, keep the cruise control mode.

As shown in Fig. 2, in the present embodiment, the vehicle 100 further includes two wheel speed sensors 150, 160. The wheel speed sensors 150, 160 are respectively disposed beside the front wheel 120 and the rear wheel 130 and are electrically connected to the processor 140. The wheel speed sensors 150, 160 are respectively configured to sense wheel speeds of the front wheel 120 and the rear wheel 130. For example, the wheel speed sensors 150, 160 are, for example, magnetoelectric wheel speed sensors, Hall wheel speed sensors, or any other elements capable of sensing wheel speed, which is not limited in the present disclosure. In some embodiments, the wheel speed sensors 150, 160 can be disposed in the body 110, as long as the wheel speed sensors 150, 160 can sense the wheel speeds of the front wheel 120 and the rear wheel 130.

The processor 140 is further configured to calculate the aforementioned wheel speed difference according to data sensed by the wheel speed sensors 150, 160, and can compare the magnitude of the wheel speed difference with the predetermined difference. For example, the wheel speed difference can be calculated by the following formula.

$$D = \left| \frac{(V_a - V_b)}{V_a} \times 100\% \right| \qquad (1)$$

D represents the wheel speed difference, Va represents the wheel speed of one of the front wheel 120 and the rear wheel 130, and Vb represents the wheel speed of the other of the front wheel 120 and the rear wheel 130. In some embodiments, Va represents the wheel speed of the rear wheel 130 and Vb represents the wheel speed of the front wheel 120.

In some embodiments, the predetermined difference is about 4%, but the present disclosure is not limited in this regard, and those with ordinary knowledge in the field can adjust the predetermined difference according to the situation.

For example, when a road surface is slippery and the rear wheel 130 skids, the wheel speed difference between the front wheel 120 and the rear wheel 130 will increase instantaneously. At this time, if the vehicle 100 is still driving in the cruise control mode, the vehicle 100 may overturn and cause injury to the driver. To avoid such a situation, the vehicle control method proposed by the present disclosure can detect the wheel speed difference between the front wheel 120 and the rear wheel 130 at any time, and automatically release the cruise control mode.

In addition, the following conditions will also cause the wheel speed difference to increase: (1) when at least one of the front wheel 120 and the rear wheel 130 has a problem (for example, the front wheel 120 and/or the rear wheel 130 are/is off the ground, the brakes of the front wheel 120 and/or the rear wheel 130 are/is locked, etc.); and (2) when the vehicle 100 accelerates/decelerates dramatically. In this way, the vehicle control method of the present embodiment can enable the vehicle 100 driving in the cruise control mode to automatically release the cruise control mode when driving on a road with severe conditions or when the wheels are out of condition, thereby effectively avoiding occurrence of traffic accidents.

In some embodiments, the mode release condition further includes that the stored power of the electrical energy storage device of the vehicle 100 is equal to or less than the predetermined power. In some embodiments, the vehicle 100 is an electric vehicle that uses a motor to drive the rear wheel 130 and/or the front wheel 120, and the electric power stored by the aforementioned electric energy storage device is the power source of the motor. For example, the predetermined power is about 12%, but the present disclosure is not limited in this regard. In this way, the vehicle control method of the present embodiment can automatically release the vehicle 100 from the cruise control mode when the electric energy storage device is in a low battery condition, so as to avoid further power consumption of the vehicle 100.

In some embodiments, the mode release condition further includes that the temperature of the electrical energy storage device is equal to or greater than the predetermined temperature. For example, the predetermined temperature is about 63 degrees Celsius, but the present disclosure is not limited in this regard. In this way, the vehicle control method of the present embodiment can automatically release the vehicle 100 from the cruise control mode when the electric energy storage device is at a high temperature, so as to avoid the electric energy storage device and/or the vehicle 100 from being damaged due to further increase of the temperature of the electric energy storage device.

In some embodiments, the mode release condition further includes that the speed of the vehicle is equal to or less than a safe speed. For example, the safe speed is about 5 km/h, but the present disclosure is not limited in this regard. In some embodiments, the safe speed may be set to be less than the first predetermined speed. In this way, the vehicle control method of the present embodiment can automatically release the cruise control mode when the vehicle 100 cannot run at the set speed of the cruise control mode due to certain factors (for example, the vehicle 100 climbs a steep slope), so as to avoid excessive wear and tear of the power system of the vehicle 100.

In some embodiments, the processor 140 may not set the safe speed, but use the first predetermined speed to determine whether to release the cruise control mode. For example, when the speed of the vehicle 100 is less than the first predetermined speed, the processor 140 determines that the vehicle 100 meets the mode release condition, and releases the cruise control mode.

In some embodiments, the mode release condition further includes that the vehicle 100 receives a mode release request signal. In some embodiments, when the function button 170 is pressed when the vehicle 100 is driving in the cruise control mode, the processor 140 can receive the corresponding pressing signal, regard the pressing signal as the mode release request signal, and then release the cruise control mode according to the mode release request signal. As mentioned above, the function button 170 can be implemented by a switch to generate and output the pressing signal.

In some embodiments, when the brake of the vehicle 100 is operated when the vehicle 100 is driving in the cruise control mode (that is, the brake is in a pressed state), the processor 140 can receive a corresponding operation signal, and regard the operation signal as the mode release request signal. In this way, the vehicle control method of the present embodiment allows the driver to autonomously determine the timing of releasing the cruise control mode through manual operation. In some embodiments, the processor 140 will not release the cruise control mode until the brake is operated for a certain time period (e.g., more than 3 seconds).

In some embodiments, the mode release condition further includes that a load shedding occurs to the power system of the vehicle 100 (i.e., the temperature of the motor is greater than the predetermined motor temperature). At this time, the processor 140 determines that the temperature of the motor is too high, which may affect the driving safety, and releases the cruise control mode for decreasing the output power of the motor.

In some embodiments, when only one of the aforementioned mode release conditions is satisfied, the processor 140 controls the vehicle 100 to release the cruise control mode. In some embodiments, the cruise control mode is released only when the vehicle 100 meets at least two of the aforementioned mode release conditions. Alternatively, in some embodiments, the cruise control mode is released only when the vehicle 100 meets each of the aforementioned mode release conditions.

In addition, as shown in Fig. 1, in the present embodiment, the vehicle control method further includes steps S105 and S106.

Step S105: determining whether the vehicle 100 meets second mode activation conditions when the vehicle 100 is not driving in the cruise control mode, in which the second mode activation conditions include that the vehicle 100 receives the mode activation request signal and the speed of the vehicle 100 is equal to or less than a second predetermined speed.

Step S106: making the vehicle 100 drive in a reverse mode when the vehicle 100 meets the second mode activation conditions. On the contrary, if the vehicle 100 does not meet the second mode activation conditions, the vehicle 100 keeps operating in the current mode.

In some embodiments, when the function button 170 is pressed when the vehicle 100 is not driving in the cruise control mode, the processor 140 may receive a corresponding pressing signal, and regard the pressing signal as the mode activation request signal.

In some embodiments, when the processor 140 receives the mode activation request signal and the speed of the vehicle 100 is equal to or greater than the first predetermined speed, the vehicle 100 meets the first mode activation condition and runs in the cruise mode; and when the processor 140 receives the mode activation request signal and the speed of the vehicle 100 is less than the second predetermined speed, the vehicle 100 meets the second mode activation conditions and drives in the reverse mode. In some embodiments, the function button 170 is a combination button of cruise control and reverse. Hence, according to the vehicle control method of the present embodiment, the driver can determine whether the vehicle 100 enters the cruise control mode or the reverse mode according to the current speed of the vehicle 100 by pressing the single function button 170.

In some embodiments, the second predetermined speed is less than the first predetermined speed. For example, the first predetermined speed is about 10 km/h, and the second predetermined speed is about 5 km/h, but the present disclosure is not limited in this regard. In this way, a range between the first predetermined speed and the second predetermined speed can be used as a buffer to avoid driver's misoperation (e.g., the vehicle 100 is intended to enter the cruise control mode but incorrectly enters the reverse mode, and vice versa).

In some embodiments, the vehicle control method of the present disclosure may be implemented through one or more microcontrollers. However, those skilled in the art will recognize that the embodiments disclosed herein, in whole or in part, can be equivalently implemented in standard integrated circuits (e.g., Application Specific Integrated Circuits or ASICs), as one or more computer programs executed by one or more computers (e.g., as one or more programs running on one or more computer systems), as one or more programs executed by on one or more controllers (e.g., microcontrollers) as one or more programs executed by one or more processors 140 (e.g., microprocessors), as firmware, or as virtually any combination thereof, and that designing the circuitry and/or writing the code for the software and/or firmware would be well within the skill of one of ordinary skill in the art in light of the teachings of this disclosure.

When logic is implemented as software/firmware and stored in memory, logic or information can be stored on any non-transitory computer readable medium for use by or in connection with any processor-related system or method. In the context of this disclosure, a memory is a non-transitory computer- readable or processor-readable storage medium that is an electronic, magnetic, optical, or other physical device or means that non-transitorily contains or stores a computer and/or processor program. Logic and/or the information can be embodied in any computer readable medium for use by or in connection with an instruction execution system, apparatus, or device, such as a computer-based system, processor-containing system, or other system that can fetch the instructions from the instruction execution system, apparatus, or device and execute the instructions associated with logic and/or information.

In some embodiments, the non-transitory computer readable storage medium having computer executable instructions thereon that, when executed by one or more computer processors 140, cause the one or more computer processors 140 to: determine whether at least one mode release condition is met when information related to a vehicle 100 is driving in a cruise control mode is received, in which the at least one mode release condition includes that information related to a wheel speed difference between a front wheel 120 and a rear wheel 130 of the vehicle 100 is equal to or greater than a predetermined difference is received; and generate a mode release command to release the cruise control mode when the at least one mode release condition is met.

In some embodiments, the non-transitory computer readable storage medium further has computer executable instructions thereon, when executed by one or more computer processors 140, further cause the one or more computer processors 140 to: determine whether at least one first mode activation condition is met when information related to the vehicle 100 is not driving in the cruise control mode is received, in which the at least one first mode activation condition includes that information related to the vehicle 100 receives a mode activation request signal is received; and generate a mode activation command to activate the cruise control mode when the at least one first mode activation condition is met. In this way, the vehicle 100 can then enter the cruise control mode according to the mode activation command. On the contrary, when the first mode activation condition is not met, the non-transitory computer readable storage medium can generate a control command to cause the vehicle 100 to continue driving in the current mode.

In some embodiments, the non-transitory computer readable storage medium further has computer executable instructions thereon, when executed by one or more computer processors 140, further cause the one or more computer processors 140 to: determine whether second mode activation conditions are met when information related to the vehicle 100 is not driving in the cruise control mode is received, in which the second mode activation conditions include that information related to the vehicle 100 receives the mode activation request signal and information related to the speed of the vehicle is equal to or less than a second predetermined speed are received; and generate a mode activation command to activate a reverse mode when the second mode activation conditions are met. In this way, the vehicle 100 can then enter the reverse mode according to the mode activation command. On the contrary, when the second mode activation conditions are not met, the non-transitory computer readable storage medium can generate a control command to cause the vehicle 100 to continue driving in the current mode.

According to the foregoing recitations of the embodiments of the disclosure, it can be seen that in the vehicle control method, the vehicle, and the non-transitory computer readable storage medium of the present disclosure, when the vehicle is driving in the cruise control mode, the vehicle is determined to meet the mode release condition at least when the wheel speed difference between the front and rear wheels of the vehicle is equal to or greater than the predetermined difference. In this way, the vehicle in the cruise control mode can be automatically released from the cruise control mode when driving on a road with bad conditions or when the wheels are out of condition, thereby effectively avoiding the occurrence of traffic accidents.

**Claims**

1.  A vehicle control method, comprising:

    determining whether a vehicle (100) meets at least one mode release condition when the vehicle (100) is driving in a cruise control mode, wherein the at least one mode release condition comprises that a wheel speed difference between a front wheel (120) and a rear wheel (130) of the vehicle (100) is equal to or greater than a predetermined difference; and
    releasing the cruise control mode when the vehicle (100) meets the at least one mode release condition.

2.  The vehicle control method of claim 1, wherein the at least one mode release condition further comprises at least one of:

    a stored power of an electrical energy storage device of the vehicle (100) is equal to or less than a predetermined power;
    a temperature of the electrical energy storage device is equal to or greater than a predetermined temperature;
    a speed of the vehicle (100) is equal to or less than a safe speed;
    the vehicle (100) receives a mode release request signal;
    a brake of the vehicle (100) is operated; and
    a temperature of a power system of the vehicle (100) is greater than a predetermined motor temperature.

3.  The vehicle control method of claim 1 or 2, further comprising:

    determining whether the vehicle (100) meets at least one first mode activation condition when the vehicle (100) is not driving in the cruise control mode, wherein the at least one first mode activation condition comprises that the vehicle (100) receives a mode activation request signal; and
    making the vehicle (100) drive in the cruise control mode when the vehicle (100) meets the at least one first mode activation condition.

4.  The vehicle control method of claim 3, wherein the at least one first mode activation condition further comprises that a speed of the vehicle (100) is equal to or greater than a first predetermined speed.

5.  The vehicle control method of claim 3, wherein the at least one first mode activation condition further comprises at least one of:

    a stored power of an electrical energy storage device of the vehicle (100) is greater than a predetermined power;
    a temperature of the electrical energy storage device is less than a predetermined temperature;
    a brake of the vehicle (100) is in an idle state;
    a speed of the vehicle (100) is within a predetermined speed range; and
    a temperature of a power system of the vehicle (100) is equal to or less than a predetermined motor temperature.

**6.** The vehicle control method of claim 4, further comprising:

determining whether the vehicle (100) meets second mode activation conditions when the vehicle (100) is not driving in the cruise control mode, wherein the second mode activation conditions comprise that the vehicle (100) receives the mode activation request signal and the speed of the vehicle (100) is equal to or less than a second predetermined speed; and
making the vehicle (100) drive in a reverse mode when the vehicle (100) meets the second mode activation conditions.

**7.** The vehicle control method of claim 6, wherein the second predetermined speed is less than the first predetermined speed.

**8.** A vehicle (100), comprising:

a body (110);
a front wheel (120) rotatably engaged with the body (110);
a rear wheel (130) rotatably engaged with the body (110);
two wheel speed sensors (150, 160) respectively configured to sense wheel speeds of the front wheel (120) and the rear wheel (130); and
a processor (140) disposed on the body (110) and configured to:

determine whether the vehicle (100) meets at least one mode release condition when the vehicle (100) is driving in a cruise control mode, wherein the at least one mode release condition comprises that a wheel speed difference between the front wheel (120) and the rear wheel (130) is equal to or greater than a predetermined difference; and
release the cruise control mode when the vehicle (100) meets the at least one mode release condition.

**9.** The vehicle (100) of claim 8, wherein the at least one mode release condition further comprises at least one of:

a stored power of an electrical energy storage device of the vehicle (100) is equal to or less than a predetermined power;
a temperature of the electrical energy storage device is equal to or greater than a predetermined temperature;
a speed of the vehicle (100) is equal to or less than a safe speed;
the vehicle (100) receives a mode release request signal;
a brake of the vehicle (100) is operated; and
a temperature of a power system of the vehicle (100) is greater than a predetermined motor temperature.

**10.** The vehicle (100) of claim 8 or 9, wherein the processor (140) is further configured to:

determine whether the vehicle (100) meets at least one first mode activation condition when the vehicle (100) is not driving in the cruise control mode, wherein the at least one first mode activation condition comprises that the vehicle (100) receives a mode activation request signal; and
make the vehicle (100) drive in the cruise control mode when the vehicle (100) meets the at least one first mode activation condition.

**11.** The vehicle (100) of claim 10, wherein the at least one first mode activation condition further comprises that a speed of the vehicle (100) is equal to or greater than a first predetermined speed.

**12.** The vehicle (100) of claim 10, wherein the at least one first mode activation condition further comprises at least one of:

a stored power of an electrical energy storage device of the vehicle (100) is greater than a predetermined power;
a temperature of the electrical energy storage device is less than a predetermined temperature;
a brake of the vehicle (100) is in an idle state;
a speed of the vehicle (100) is within a predetermined speed range; and
a temperature of a power system of the vehicle (100) is equal to or less than a predetermined motor temperature.

**13.** The vehicle (100) of claim 11, wherein the processor (140) is further configured to:

determine whether the vehicle (100) meets second mode activation conditions when the vehicle (100) is not driving in the cruise control mode, wherein the second mode activation conditions comprise that the vehicle (100) receives the mode activation request signal and the speed of the vehicle (100) is equal to or less than a second predetermined speed; and

make the vehicle (100) drive in a reverse mode when the vehicle (100) meets the second mode activation conditions.

**14.** The vehicle (100) of claim 13, wherein the second predetermined speed is less than the first predetermined speed.

Start

Vehicle is not driven in cruise control mode

S101

Whether vehicle meets first mode activation condition?

No    No

S105

Whether vehicle meets second mode activation conditions?

Yes

keeping current mode

Yes

S106

Making vehicle drive in cruise control mode

Making vehicle drive in reverse mode

S102

S103

Whether vehicle meets mode release condition? (mode release condition includes wheel speed difference between front wheel and rear wheel of vehicle is equal to or greater than predetermined difference)

No

Yes

S104

Releasing cruise control mode

keeping cruise control mode

Fig. 1

Fig. 2

Europäisches
Patentamt

European
Patent Office

Office européen
des brevets

# EUROPEAN SEARCH REPORT

Application Number

EP 23 17 1509

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2005 023701 A1 (BOSCH GMBH ROBERT [DE]) 7 December 2006 (2006-12-07) | 1,8 | INV. B60K31/00 |
| Y | * paragraphs [0001], [0011], [0012] * | 2-7,9-14 | B60W30/14 B60K28/16 |
| Y | CN 113 788 019 A (DONGFENG COMMERCIAL VEHICLES CO LTD) 14 December 2021 (2021-12-14) * paragraphs [0004], [0006], [0017] * | 2-5,9-12 | B60W30/18 |
| Y | Tesla: "Tesla Model Y Owners Manual", , 1 November 2021 (2021-11-01), pages 1-303, XP093103842, Internet Retrieved from the Internet: URL:https://www.tesla.com/ownersmanual/model y/en_us/GUID-41E02406-1983-4511-BBB4-158 DD94796C6.html [retrieved on 2023-11-21] * page 71 * | 6,7,13, 14 | |
| A | EP 1 950 077 B1 (KEIHIN CORP [JP]) 4 September 2013 (2013-09-04) * paragraph [0002] * | 2,9 | TECHNICAL FIELDS SEARCHED (IPC) B60W B60K B60G |
| A | US 2018/001897 A1 (BROCKLEY NICK [GB]) 4 January 2018 (2018-01-04) * paragraph [0007] * | 1,8 | |
| A | JP 2017 132363 A (BOSCH GMBH ROBERT) 3 August 2017 (2017-08-03) * paragraph [0049] * | 2,4-7 | |

The present search report has been drawn up for all claims

| Place of search | Date of completion of the search | Examiner |
|---|---|---|
| Munich | 23 November 2023 | Bak, Maciej |

EPO FORM 1503 03.82 (P04C01)

## ANNEX TO THE EUROPEAN SEARCH REPORT
## ON EUROPEAN PATENT APPLICATION NO.

EP 23 17 1509

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2023

| Patent document cited in search report | | | Publication date | Patent family member(s) | | | Publication date |
|---|---|---|---|---|---|---|---|
| DE 102005023701 | A1 | | 07-12-2006 | DE 102005023701 | A1 | | 07-12-2006 |
| | | | | EP 1726471 | A1 | | 29-11-2006 |
| CN 113788019 | A | | 14-12-2021 | NONE | | | |
| EP 1950077 | B1 | | 04-09-2013 | CN 101309812 | A | | 19-11-2008 |
| | | | | EP 1950077 | A1 | | 30-07-2008 |
| | | | | JP 4037885 | B2 | | 23-01-2008 |
| | | | | JP 2007137186 | A | | 07-06-2007 |
| | | | | US 2009173562 | A1 | | 09-07-2009 |
| | | | | WO 2007058094 | A1 | | 24-05-2007 |
| US 2018001897 | A1 | | 04-01-2018 | AU 2016212315 | A1 | | 31-08-2017 |
| | | | | CN 107207011 | A | | 26-09-2017 |
| | | | | EP 3250428 | A1 | | 06-12-2017 |
| | | | | GB 2534571 | A | | 03-08-2016 |
| | | | | US 2018001897 | A1 | | 04-01-2018 |
| | | | | WO 2016120100 | A1 | | 04-08-2016 |
| JP 2017132363 | A | | 03-08-2017 | CN 108473118 | A | | 31-08-2018 |
| | | | | EP 3409546 | A1 | | 05-12-2018 |
| | | | | JP 6570659 | B2 | | 04-09-2019 |
| | | | | JP 2017132363 | A | | 03-08-2017 |
| | | | | JP WO2017130042 | A1 | | 06-09-2018 |
| | | | | TW 201726455 | A | | 01-08-2017 |
| | | | | US 2019039581 | A1 | | 07-02-2019 |
| | | | | WO 2017130042 | A1 | | 03-08-2017 |

EPO FORM P0459

For more details about this annex : see Official Journal of the European Patent Office, No. 12/82